# EUROPÄISCHE PATENTSCHRIFT

(11) **EP 1 232 796 B1**
(45) Veröffentlichungstag und Bekanntmachung des Hinweises auf die Patenterteilung: **18.08.2004**
(21) Anmeldenummer: 01115564.5
(22) Anmeldetag: 28.06.2001
(51) Int. Cl.: B05B 1/30, B67D 5/06, B29B 7/76

(54) **Selbstreinigende Spritzpistolendüse**
Self-cleaning spray gun nozzle
Buse auto-nettoyante pour un pistolet de pulvérisation

(30) Priorität: 16.02.2001 DE 20102842 U
(43) Veröffentlichungstag der Anmeldung: 21.08.2002
(73) Patentinhaber: WIWA WILHELM WAGNER GMBH & CO. KG, D-35633 Lahnau (DE)
(72) Erfinder: Scherer, Oswald, 35633 Lahnau (DE)
(74) Vertreter: Böck, Bernhard, Dipl.-Ing.

(56) Entgegenhaltungen:
- DE-A- 2 201 903
- DE-A- 3 207 828
- US-A- 3 263 928

## Beschreibung

Die Erfindung betrifft eine Spritzpistole, insbesondere für das Verspritzen abrasiver bzw. mit abrasiven Stoffen versetzte Medien mit einem mittels einer Düsennadel betätigbaren Ventil, das im Pistolenkopf nahe der Austrittsöffnung für die Medien angeordnet ist und mit einer Betätigungs- und Rückstellvorrichtung für die Düsennadel.

Spritzpistolen der eingangs genannten Art sind bekannt, wobei diese in der Regel zur Verarbeitung von 2-Komponenten-Lacken oder sonstiger Materialien dienen, denen in der Regel noch abrasive Teilchen beigemischt sind, beispielsweise für die Auftragung eines Unterbodenschutzes auf Fahrzeuge oder von 2-Komponenten-Polyurethanlacke. Es ist bekannt, dass die Verarbeitungszeit (Topfzeit) dieser Lacke relativ kurz ist, so dass sie erst kurz vor dem Verspritzen vermischt werden können. Ein Problem bei der Verwendung der Spritzpistolen für derartige Lacke besteht darin, dass die Spritzpistolen nach erfolgtem Arbeitsgang aufwendig mit Lösungsmitteln gereinigt werden müssen, um ein Aushärten der bereits miteinander vermischten und sich noch in der Pistole befindlichen Lacke zu verhindern. Hierzu sind in der Regel Lösungsmittelkanäle in der Spritzpistole vorgesehen, über die unter Zuführung von Lösungsmitteln das Material der beiden bereits in der Spritzpistole vermischten Komponenten herausgewaschen wird. Dieser Vorgang bedingt, soll dieser vollständig durchgeführt werden, in der Regel auch ein Zerlegen des verwendeten Düsensystems.

Um die Mischstrecke für die zwei oder mehr Komponenten relativ kurz zu halten, ist es bekannt, die einzelnen Komponenten erst kurz vor dem Düsenaustritt zuzuführen. Hierbei stellt sich gleichermaßen das Problem, eine einwandfreie Vermischung der Komponenten auf der verbleibenden kurzen Wegstrecke zu erhalten. Die Betätigung des Ventils erfolgt in der Regel über druckluftbetätigte Düsennadeln, was die Spritzpistole nicht nur unhandlich, sondern darüber hinaus auch teuer macht.

Aus der DE 32 07 828 A1 ist eine Spritzpistole bekannt, bei der der Düsenkanal und die Düsenöffnung durch Zuführung eines geeigneten Lösungsmittels gereinigt wird. Die Zuführung des Lösungsmittels in den Düsenkanal erfolgt dabei durch die Düsenöffnung.

Aus der US-A-3 263 928 ist eine selbstreinigende Spritzpistole bekannt, bei der der gesamte Düsenkanal durch Vorschieben der Düsennadel bis hinter die Düsenöffnung von Materialresten gereinigt werden kann.

Zur Verbesserung der aus der US-A-3 263 928 bekannten Spritzpistole schlägt die DE-OS 2 201 903 eine weitere gattungsgemäße Spritzpistole vor. Um eine Verunreinigung des Spalts zwischen Düsenkanal und Düsennadel zu vermeiden, wird die Düsennadel mit einem geeigneten Material beschichtet, so dass durch die Beschichtung die Bildung von unerwünschten Materialresten im Düsenkanal verhindert werden.

Aufgabe der vorliegenden Erfindung ist es, eine Spritzpistole mit einfachem Aufbau vorzuschlagen, mit der durch Betätigung der Düsennadel der Düsenkanal zuverlässig gereinigt werden kann.

Diese Aufgabe wird durch eine Spritzpistole nach der Lehre des Anspruchs 1 gelöst.

Gattungsgemäß weist die Düse einen in der Austrittsöffnung der Spritzpistole mündenden Kanal auf, in dem die Düsennadel verschiebbar gelagert ist, wobei der Kanal zumindest eine seitlich in diesen eintretende und zur Zuführung der Medien dienende Bohrung aufweist, die über die dem Kanal im Durchmesser angepasste Düsennadel verschließbar ist und dass die Länge der Düsennadel so gewählt ist, dass diese im Ruhezustand zumindest mit der Austrittsöffnung der Spritzpistole abschließt.

Diese Düsennadel, die vorzugsweise federbelastet ist, wird in der Ruhestellung somit zumindest bis in die Ebene der Austrittsöffnung geschoben, so dass alles bereits im Kanal des ventils vermischte Material aus dem Ventil ausgeschoben wird. Da die Düsennadel und der Kanal in ihrem Durchmesser genau exakt aufeinander abgestimmt sind, werden nicht nur die Bohrungen für die Zuführung der Medien dicht verschlossen, sondern darüber hinaus sämtliches vermischtes Material aus dem Kanal entfernt. Es bedarf zur Reinigung der Spritzpistole keinerlei Lösungsmittel. Die Spritzpistole ist selbstreinigend, da diese sich bei Beendigung des Spritzvorganges jedesmal selbsttätig mittels der Düsennadel reinigt.

Um eine exakte Mischung der beiden Medien zu erhalten, liegen die Bohrungen, über die die Medien getrennt zugeführt werden, vorteilhaft in einer Ebene und senkrecht zum Kanal, wobei die Durchmesser der Bohrungen kleiner sind als der Durchmesser des Kanals. Des Weiteren sind die Bohrungen in der Höhe gegeneinander versetzt, so dass sich beim Einspritzen der Medien in den Kanal eine turbulente Zone ausbildet, die auf kürzestem Weg zu einer vollständigen Vermischung der Medien führt.

Die Düsennadel als solches ist vorzugsweise von einer Feder beaufschlagt, die diese in die Schließstellung verschiebt, wenn der Betätigungshebel losgelassen wird.

Das Ventil ist vorteilhaft in einem Einsatzstück angeordnet, in dem Bohrungen für die Leitungen angeordnet sind, die für die Zuführung der Medien dienen. Diese Leitungen sind unmittelbar an dem Ventil angeschlossen, wobei vorteilhaft diese Leitungen relativ zum Ventil und damit zum Einsatz schwenkbar sind. Hierdurch wird die Handhabbarkeit der Spritzpistole weiter verbessert.

An die Austrittsöffnung der Düse schließt sich dann, wenn man einen Breitstrahl erzeugen will, eine sich vorzugsweise schlitzförmig erweiternde Öffnung an, wobei dann die Austrittsöffnung des Ventils gleichermaßen oval ausgebildet ist, wobei vorteilhaft die größere Achse der ovalen Öffnung senkrecht zur schlitzförmigen Öffnung angeordnet ist. Hierdurch ergibt sich ein über eine große Höhe erstreckendes gleichmäßiges Spritzbild.

Vorteilhaft ist die Düsennadel mit einer Betätigungsstange verbunden, welche von der Druckfeder beaufschlagt wird. Der Betätigungshebel der Spritzpistole ist mit einem Widerlager versehen, welches mit einem Ansatz der Betätigungsstange zusammenwirkt, so dass die Spritzpistole in einfacher Weise handbetätigbar ist und keine teuren Zusatzenergien, wie Druckluft etc. für die Bedienung erfordert.

Ein Ausführungsbeispiel der Erfindung ist im folgenden anhand der Zeichnung näher beschrieben: In dieser zeigen
- Fig. 1: eine erfindungsgemäße Spritzpistole, teilweise im Schnitt,
- Fig. 2: eine Draufsicht auf die Spritzpistole nach Fig. 1,

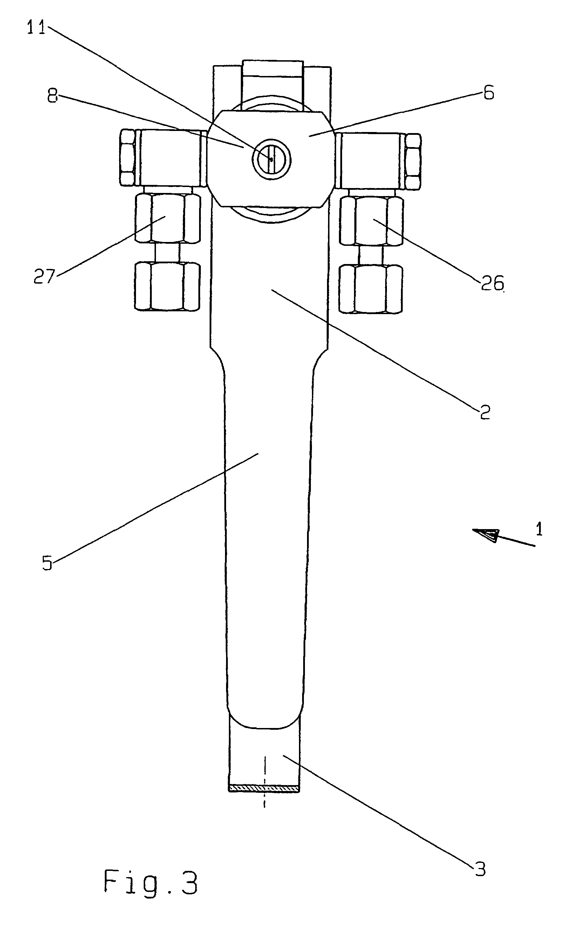

- Fig. 3: eine Vorderansicht der Spritzpistole gemäß Fig. 1,
- Fig. 4: in vergrößerter Darstellung das vordere Ende der Spritzpistole,
- Fig. 5: einen Schnitt nach Linie V.V in Fig. 1,
- Fig. 6: eine Seitenansicht des Ventils,
- Fig. 7: einen Schnitt nach Linie VII-VII in Fig. 6 und
- Fig. 8: einen Schnitt nach Linie VIII-VIII in Fig. 6.

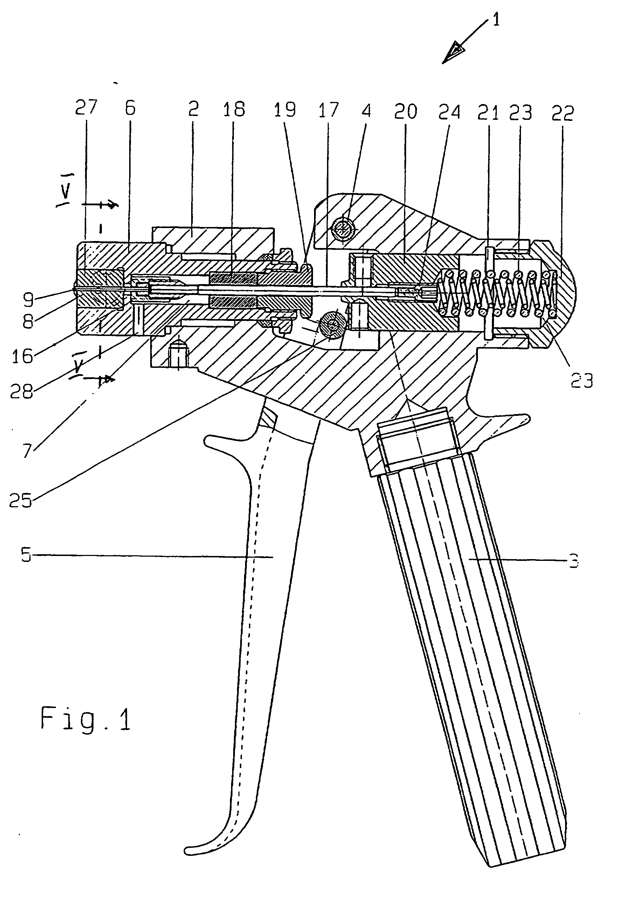

In Fig. 1 ist in Seitenansicht die Spritzpistole, teilweise im Schnitt, dargestellt. Die Spritzpistole 1 besteht aus einem Pistolenkopf 2, einem Griff 3 sowie einen im Pistolenkopf 2 um eine Achse 4 schwenkbaren Abzug 5. In den Pistolenkopf 2 der Spritzpistole 1 ist ein Einsatz 6 eingesetzt, der mit einer Bohrung 7 versehen ist. In diese Bohrung 7 ist ein Ventil 8 eingesetzt, welches einen durchgehenden Düsenkanal 9 aufweist. In den Düsenkanal 9 ist eine Düsennadel 10 aus Hartmetall eingesetzt, welche bei Nichtbetätigung der Spritzpistole 1 über die Düsenöffnung 11 des Düsenkanales 9 übersteht.

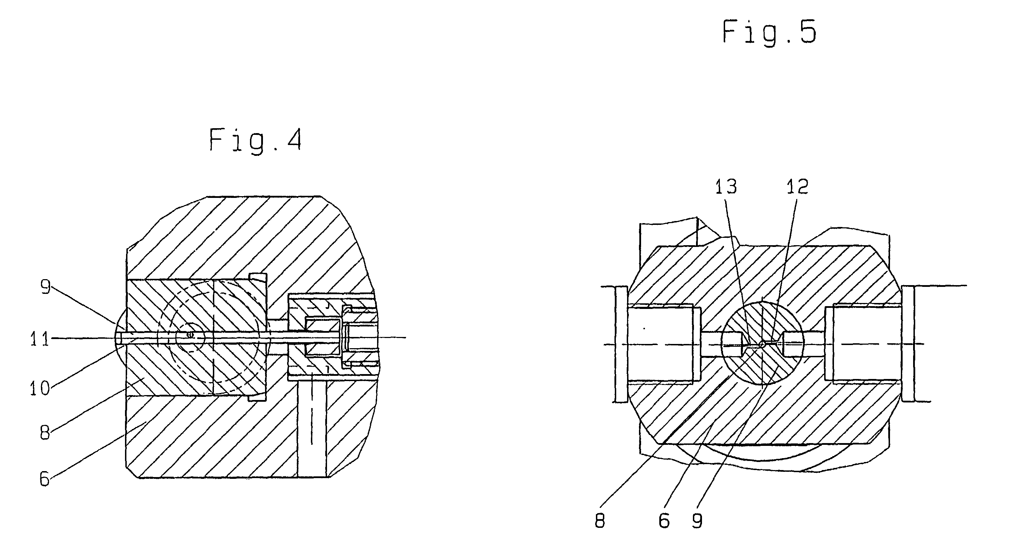

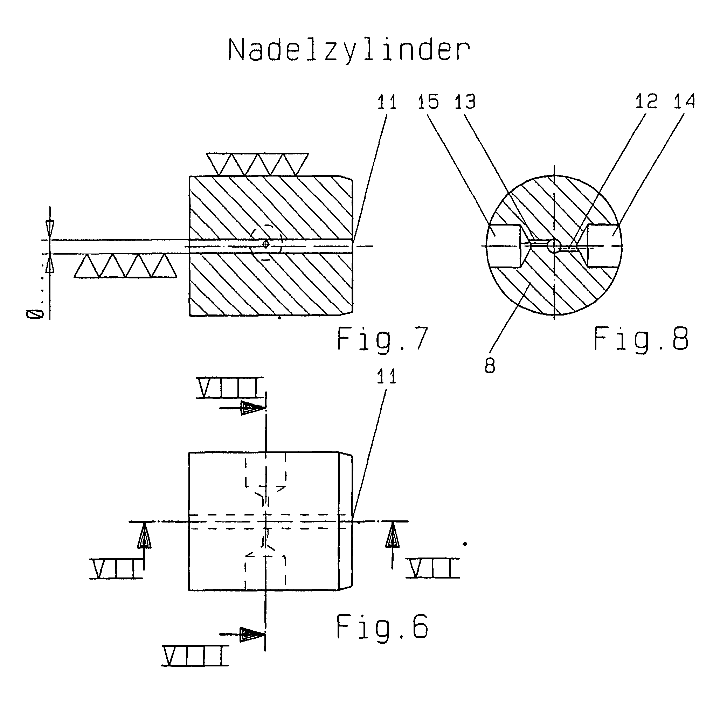

Der Aufbau des Ventils 8 ist aus den Fig. 4 bis 8 ersichtlich. Das Ventil 8 ist in dem Einsatz 6 eingepresst, wobei das Ventil 8 aus einer Keramik besteht, welches einem geringen mechanischen Verschleiß unterliegt. Senkrecht zum Düsenkanal 9 in einer Ebene gegenüberliegend, wie dies z.B. aus Fig. 6 ersichtlich ist, sind zwei Bohrungen 12, 13 eingebracht, die in den Düsenkanal 9 münden. Diese beiden Bohrungen 12, 13 sind in der Höhe gegeneinander versetzt angeordnet, wie dies am deutlichsten aus den Fig. 5 und 8 hervorgeht. Auf Grund der Anordnung der beiden Bohrungen in einer Ebene und versetzt gegeneinander wird eine intensive Mischung der durch die Anschlüsse 14, 15 zugeführten Medien erhalten. Hierdurch ist es möglich, die Medien kurz vor der Düsenöffnung 11 zuzuführen.

Die in den Düsenkanal eingesetzte Düsennadel hat eine sehr enge Passung, wobei hier die Toleranzen zwischen der Düsennadel und der Bohrung nicht größer als +/- 1µm sein sollten. Hierdurch wird zum Einen ein dichter Verschluss beim Einschieben der Düsennadel für die Bohrungen 12, 13 erhalten. Da darüber hinaus die Düsennadel bis zur Düsenöffnung oder darüber hinaus im Ruhezustand reicht, werden gleichermaßen die bereits gemischten Medien aus dem Düsenkanal 9 herausgeschoben, so dass die hierdurch bewirkte mechanische Reinigung für den Betrieb vollauf ausreichend ist und somit auf eine Reinigung durch Lösungsmittel etc. verzichtet werden kann. Darüber hinaus ist auch kein Zerlegen der Düse für eine Reinigung notwendig. Auf Grund dieser Anordnung ist sichergestellt, dass beim Abschalten der Spritzpistole gleichzeitig stets eine Reinigung derselben erfolgt.

Die Düsennadel 10 ist in einem Nadelhalter 16 befestigt, an dessen anderen Ende eine Betätigungsstange 17 angreift. Diese Betätigungsstange ist im Pistolenkopf 2 in einer Führung 18 gelagert, welche mit einer Buchse 19 in diesem Kopf gehaltert ist.

Das andere Ende der Betätigungsstange 17 ist in einem Block 20 befestigt, welcher verschiebbar in einer Bohrung 21 des Pistolenkopfes gelagert ist. Die Bohrung 21 ist an ihrem hinteren Ende über einen Deckel 22 verschlossen, wobei sich zwischen dem Deckel 22 und dem Block 20 eine Druckfeder 23 abstützt. Mittels einer im Block 20 eingesetzten Stellschraube 24 kann die Vorspannung der Feder 23 eingestellt werden.

Am Abzug 5 ist ein Widerlager 25 befestigt, welches mit dem Block 20 zusammenwirkt und diesen bei Betätigung des Abzuges 5 verschiebt und die Druckfeder zusammendrückt und damit spannt. Beim Loslassen des Abzuges 5 wird der Block 20, die Betätigungsstange 17 und damit die Düsennadel 10 nach vorne gedrückt, so dass die Bohrungen 12, 13 verschlossen und der Düsenkanal 9 gereinigt wird.

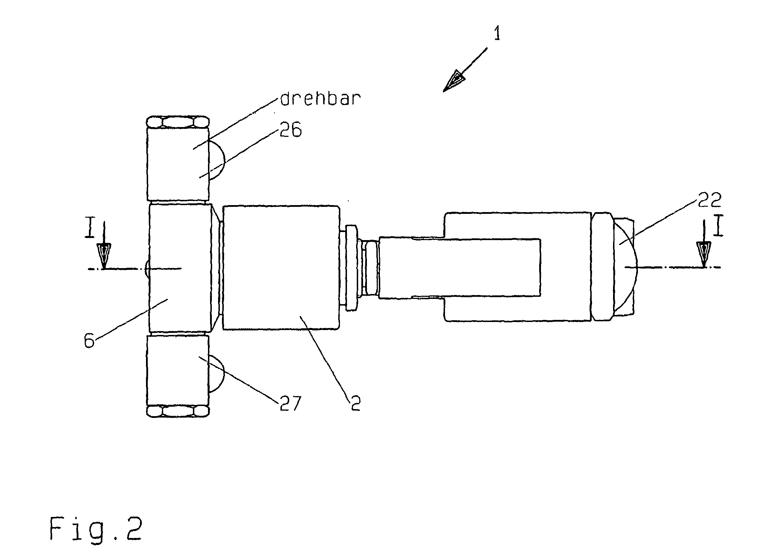

Der Aufbau der Spritzpistole ist besonders einfach gehalten und damit leicht, so dass diese einfach zu handhaben ist. Wie aus Fig. 2 ersichtlich ist, sind die beiden Zuführleitungen 26, 27 schwenkbar am Einsatz 6 gehaltert und damit auch schwenkbar zur Spritzpistole, so dass die Zuleitungen die Handhabung der Spritzpistole nicht nachteilig beeinflussen.

Die erfindungsgemäße Spritzpistole ist aus wenigen Einzelteilen aufgebaut. Der Einsatz 6 ist lediglich im Pistolenkopf eingeschraubt und die Betätigungsstange einschließlich der Führung ist mittels einer Buchse gehalten.

Am hinteren Ende dieser Nadel, d.h., in dem Bereich, in dem diese nicht mehr in das Ventil 8 eingreift, ist im Einsatz 6 ein Leckagekanal 28 angeordnet, über den eventuell anfallenden Flüssigkeiten abfließen können.

## Patentansprüche

1. Spritzpistole (1), mit einem mittels einer Düsennadel (10) betätigbaren Ventil (8), das im Pistolenkopf (2) nahe der Düsenöffnung (11) angeordnet ist und mit einer Betätigungs- und Rückstellvorrichtung (17, 23) für die Düsennadel (10), wobei
das Ventil (8) einen in der Düsenöffnung (11) der Spritzpistole (1) mündenden Düsenkanal (9) aufweist, in dem die Düsennadel (10) verschiebbar gelagert ist, dass der Düsenkanal (9) zumindest eine seitlich in diesen eintretende und zur Zuführung der Medien dienende Bohrung (12, 13) aufweist, die über die dem Düsenkanal (9) im Durchmesser angepasste Düsennadel (10) verschließbar sind, und dass die Länge der Düsennadel (10) so gewählt ist, dass diese im Ruhezustand zumindest mit der Düsenöffnung (11) der Spritzpistole (1) abschließt. **dadurch gekennzeichnet, dass** das Ventil (8) und/oder die Düsennadel (10) aus einem Hartmetall oder Keramik gefertigt ist und gleichzeitig die Düsenöffnung (11) der Spritzpistole (1) bildet wobei Düsennadel (10) und Düsenkanal (9) in ihrem Durchmesser exakt aufeinander abgestimmt sind.

2. Spritzpistole nach Anspruch 1, **dadurch gekennzeichnet, dass** die Bohrungen (12, 13) in der gleichen Ebene liegend und senkrecht zum Düsenkanal (9) verlaufend angeordnet sind.

3. Spritzpistole nach Anspruch 2, **dadurch gekennzeichnet, dass** der Durchmesser der Bohrungen (12, 13) jeweils kleiner als der des Düsenkanals (9) ist und dass die Achsen der Bohrungen (12, 13) gegeneinander versetzt sind.

4. Spritzpistole nach einem der Ansprüche 1 bis 3, **dadurch gekennzeichnet, dass** die Düsennadel (10) von einer diese in die Schließstellung drückenden Feder 23) beaufschlagt ist.

5. Spritzpistole nach Anspruch 4, **dadurch gekennzeichnet, dass** die Düsennadel (10) mittels eines handbetätigten Abzuges (5) entgegen der Kraft der Feder (23) in Öffnungsstellung verschiebbar ist.

6. Spritzpistole nach einem der Ansprüche 1 bis 5, **dadurch gekennzeichnet, dass** an die Düsenöffnung (11) der Spritzpistole (11) sich eine sich schlitzförmig erweiternder Führung (26) anschließt.

7. Spritzpistole nach Anspruch 6, **dadurch gekennzeichnet, das** die Düsenöffnung (11) der Spritzpistole (1) oval ausgebildet ist.

8. Spritzpistole nach einem der Ansprüche 1 bis 7, **dadurch gekennzeichnet, dass** die Leitungen (26, 27) für die Zuführung der Medien am Ventil (8) bzw. an dem Einsatz (6) angeschlossen sind.

9. Spritzpistole nach einem der Ansprüche 1 bis 8, **dadurch gekennzeichnet, dass** die Leitungen (26, 27) schwenkbar befestigt sind.

10. Spritzpistole nach einem der Ansprüche 1 bis 9, **dadurch gekennzeichnet, dass** das der Ventil (8) halternde Einsatz (6) mit einem Leckagekanal (28) versehen ist.

11. Spritzpistole nach einem der Ansprüche 1 bis 10, **dadurch gekennzeichnet, dass** die Düsennadel mit einer Betätigungsstange (17) verbunden ist, die in einer Führung (18) verschiebbar gelagert und mit der Feder (23) verbunden ist.

12. Spritzpistole nach Anspruch 11, **dadurch gekennzeichnet, dass** am Abzug (5) ein Widerlager (25) befestigt ist, das mit der Betätigungsstange (17) zusammenwirkt.

## Claims

1. A spray pistol (1) having a valve (8) that is operable via a nozzle needle (10) and is arranged close to the nozzle opening (11) in the spray pistol head (2), and having an actuating and return device (17, 23) for the nozzle needle (10),
wherein the valve (8) has a nozzle channel (9) that opens in the nozzle opening (11) of the spray pistol (1) and in which the nozzle needle (10) is movably disposed, nozzle channel (9) has at least one hole (12, 13) extending into the side thereof and serving to supply the spray media, and which are closable via the nozzle needle (10) whose diameter is conformed with the nozzle channel (9), and the length of the nozzle needle (10) is chosen such that in the non-operated condition it creates a sealing closure at least with the nozzle opening (11)
**characterised in that** that valve (8) and/or the nozzle needle (10) is made from a hard metal or porcelain and at the same time forms the nozzle opening (11) of the spray pistol (1),
wherein the diameters of nozzle needle (10) and nozzle channel (9) are matched with each other exactly.

2. The spray pistol according to claim 1, **characterised in that** the holes (12, 13) are arranged to lie in the same plane and extend perpendicularly to the nozzle channel (9).

3. The spray pistol according to claim 2, **characterised in that** the diameters of the holes (12, 13) are each smaller than that of the nozzle channel (9) and that the axes of the holes (12, 13) are offset with respect to one another.

4. The spray pistol according to any of claims 1 to 3, **characterised in that** the nozzle needle (10) is under tension via a spring (23) constraining the nozzle needle towards the closed position.

5. The spray pistol according to claim 4, **characterised in that** the nozzle needle (10) is movable into the open position against the force of the spring (23) via a hand-operated trigger (5).

6. The spray pistol according to any of claims 1 to 5, **characterised in that** a guide (26) opening out in a slit formation joins with the nozzle opening (11) of the spray pistol (1).

7. The spray pistol according to claim 6, **characterised in that** the nozzle opening (11) of the spray pistol (1) is oval in shape.

8. The spray pistol according to any of claims 1 to 7, **characterised in that** the lines (26, 27) for supplying the spray media are connected to the valve (8) or the insert (6).

9. The spray pistol according to any of claims 1 to 8, **characterised in that** the lines (26, 27) are rotatably attached.

10. The spray pistol according to any of claims 1 to 9, **characterised in that** the insert (6) retaining the valve (8) is equipped with a leak duct (28).

11. The spray pistol according to any of claims 1 to 10, **characterised in that** the nozzle needle (10) is connected to an actuating rod (17) that is movably seated in a guide (18) and attached to the spring (23).

12. The spray pistol according to claim 11, **characterised in that** a counter bearing (25) is attached to the trigger (5) and cooperates with the actuating rod (17).

## Revendications

1. Pistolet pulvérisateur (1), avec une soupape (8) actionnable à l'aide d'une aiguille d'injection (10), qui est placée dans la tête du pistolet (2), à proximité de l'orifice de la buse (11) et avec un dispositif d'actionnement et de rappel (17, 23) de l'aiguille d'injection (10),
la soupape (8) étant munie d'un canal d'écoulement (9) qui débouche dans l'orifice de la buse (11) du pistolet pulvérisateur (1), dans lequel l'aiguille d'injection (10) est logée de façon déplaçable, le canal d'écoulement (9) étant muni d'au moins un alésage (12, 13) pénétrant latéralement dans celui-ci et destiné à amener les fluides, qui peut être fermé par l'intermédiaire de l'aiguille d'injection (10) dont le diamètre est adapté à celui du canal d'écoulement (9) et la longueur de l'aiguille d'injection (10) étant choisie de façon à ce qu'au repos, elle se ferme au moins sur l'orifice de la buse (11) du pistolet pulvérisateur (1),
**caractérisé en ce que** la soupape (8) et/ou l'aiguille d'injection (10) est fabriquée dans un métal dur ou en céramique et forme également l'ouverture dans la buse (11) du pistolet pulvérisateur (1),
l'aiguille d'injection (10) et le canal d'écoulement (9) étant adaptés entre eux au niveau de leur diamètre.

2. Pistolet pulvérisateur selon la revendication 1, **caractérisé en ce que** les alésages (12, 13) sont disposés sur le même plan que le canal d'écoulement (9) et s'étendent perpendiculairement à ce dernier.

3. Pistolet pulvérisateur selon la revendication 2, **caractérisé en ce que** le diamètre des alésages (12, 13) est respectivement inférieur à celui du canal d'écoulement (9) et **en ce que** les axes des alésages (12, 13) sont déportés l'un par rapport à l'autre.

4. Pistolet pulvérisateur selon la revendication 1 à 3, **caractérisé en ce que** l'aiguille d'injection (10) est soumise à un ressort (23) qui la pousse en position de fermeture.

5. Pistolet pulvérisateur selon la revendication 1, **caractérisé en, ce que** l'aiguille d'injection (10) est déplaçable en position d'ouverture contre la force du ressort (23), à l'aide d'une détente (5) à actionnement manuel.

6. Pistolet pulvérisateur selon la revendication 1 à 5, **caractérisé en ce que** l'orifice de la buse (11) du pistolet pulvérisateur (1) se raccorde sur un guidage (26) qui s'évase en forme de fente.

7. Pistolet pulvérisateur selon la revendication 6, **caractérisé en ce que** l'orifice de la buse (11) du pistolet pulvérisateur (1) est de forme ovale.

8. Pistolet pulvérisateur selon la revendication 1 à 7, **caractérisé en ce que** les conduites (26, 27) pour l'alimentation du fluide sont raccordées sur la soupape (8) ou sur l'insert (6).

9. Pistolet pulvérisateur selon l'une quelconque des revendications 1 à 8, **caractérisé en ce que** les conduites (26, 27) sont fixées de façon pivotante.

10. Pistolet pulvérisateur selon l'une quelconque des revendications 1 à 9, **caractérisé en ce que** l'insert (6) maintenant la soupape (8) est muni d'un canal de fuites (28).

11. Pistolet pulvérisateur selon l'une quelconque des revendications 1 à 10, **caractérisé en ce que** l'aiguille d'injection est reliée à une tige d'actionnement (17) qui est logée de façon déplaçable dans un guidage (18) et qui est reliée au ressort (23).

12. Pistolet pulvérisateur selon la revendication 11, **caractérisé en ce qu'**une butée (25) coopérant avec la tige d'actionnement (17) est fixée sur la détente (5).
